(19) **Europäisches Patentamt / European Patent Office / Office européen des brevets**

(11) **EP 4 116 279 A1**

(12) **EUROPEAN PATENT APPLICATION**
published in accordance with Art. 153(4) EPC

(43) Date of publication:
**11.01.2023 Bulletin 2023/02**

(21) Application number: **21765165.2**

(22) Date of filing: **03.03.2021**

(51) International Patent Classification (IPC):
**C04B 111/28** (2006.01)     **C04B 111/40** (2006.01)
**C08J 9/40** (2006.01)     **C04B 16/08** (2006.01)
**C04B 28/06** (2006.01)     **C04B 28/14** (2006.01)
**E04B 1/94** (2006.01)

(52) Cooperative Patent Classification (CPC):
(C-Sets available)
**C04B 16/08; C04B 28/06; C04B 28/065;
C04B 28/14; C08J 9/40; E04B 1/94;** C04B 2111/28

(Cont.)

(86) International application number:
**PCT/JP2021/008276**

(87) International publication number:
**WO 2021/177378 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.03.2020 JP 2020037244**

(71) Applicants:
• **JSP Corporation**
  **Tokyo 100-0005 (JP)**
• **Denka Company Limited**
  **Tokyo 103-8338 (JP)**

(72) Inventors:
• **TABARA,Kazuto**
  **Tokyo 103-8338 (JP)**
• **NAGASAKI,Hironori**
  **Tokyo 103-8338 (JP)**
• **MIZUTA,Kohei**
  **Tokyo 103-8338 (JP)**
• **MITSUMOTO,Masanori**
  **Tokyo 100-0005 (JP)**
• **SHIMOJO,Yoshinori**
  **Tokyo 100-0005 (JP)**
• **KIKKAWA,Hironobu**
  **Tokyo 100-0005 (JP)**

(74) Representative: **Gulde & Partner
Patent- und Rechtsanwaltskanzlei mbB
Wallstraße 58/59
10179 Berlin (DE)**

(54) **FIREPROOF HEAT INSULATING BOARD AND FIREPROOF HEAT INSULATING STRUCTURAL BODY**

(57)    A fireproof heat insulating board including a foamed resin molded body filled with a slurry, the foamed resin molded body having continuous voids, wherein the filled slurry forms a hydrate containing water of crystallization in an amount of 50 kg/m$^3$ or more through hydration reaction after the filling, and at least a part of the surface of the board is reinforced with one or more inorganic fibers selected from the group consisting of a basalt fiber and a ceramic fiber.

(52) Cooperative Patent Classification (CPC): (Cont.)

C-Sets
**C04B 28/065, C04B 14/46, C04B 16/08,
C04B 22/143;
C04B 28/065, C04B 14/4668, C04B 16/082;
C04B 28/14, C04B 7/323, C04B 14/4668,
C04B 16/08**

**Description**

Technical Field

The present invention relates to a fireproof heat insulating board for building a fireproof heat insulating structure of a building, and also relates to a fireproof heat insulating structure.

Background Art

In buildings, various heat insulating materials and fireproof materials are used, and as the heat insulating materials, polyurethane foam, polystyrene foam, phenolic foam, etc. that are resin foams having high heat insulating effect, lightweight properties, and good workability are used, and besides, inorganic fiber aggregates that are low in cost, such as glass wool and rock wool, are also used.

Since the resin foams are organic substances, they burn when a fire occurs, and often cause expanding of damage due to the spread of fire, so that measures against the above problem have been desired.

On the one hand, the inorganic fiber aggregates such as glass wool and rock wool are mainly constituted of non-combustible materials, but they tend to have high thermal conductivity as compared with the resin foams and are inferior in heat insulating properties, and further, there is a feeling of piercing because they are fibrous, so that they also have a problem of inferior workability. Moreover, at the time of construction, a method in which the fiber aggregate is made to be in a packing mode of a plastic bag containing the aggregate, so that this bag is inserted between a column and an exterior wall of a house is conventionally adopted, but there is a problem of formation of a gap or drop-off of the bag over time.

On the other hand, heat insulating materials obtained by imparting non-combustibility to resin foams are already on the market. Such an example includes a non-combustible heat insulating board having a structure in which a non-combustible material such as an aluminum foil, an aluminum hydroxide paper, or a gypsum-based board material is laminated on one or both surfaces of a phenolic foam board. However, in such a conventional non-combustible heat insulating board, the surface facing flames does not burn in the event of a fire, but there is a problem in that the phenolic foam inside melts down to form a cavity due to heat and the board itself drops off and causes the spread of fire, which has not been solved, therefore such a board has not become a material satisfying the fireproof construction specifications stipulated in the Japanese Building Standard Law.

As techniques to improve combustion resistance of resin foams, the following ones are known. For example, as techniques to improve combustion resistance of polyurethane foam, a technique relating to a heat insulating material in which a foam is formed from an alkali metal carbonate, isocyanates, water, and a reaction catalyst (Patent Literature 1), and a technique relating to a grouting material mainly used for ground improvement for a tunnel, which is a hardenable composition composed of one or two or more inorganic compounds selected from the group consisting of a hydroxide, an oxide, a carbonate, a sulfate, a nitrate, an aluminate, a borate, and a phosphate of a metal selected from the group consisting of lithium, sodium, potassium, boron, and aluminum, water, and isocyanates (Patent Literature 2) are known. However, the conventional technique of Patent Literature 2 has been developed for ground improvement and is not for the purpose of acquiring heat insulation performance. In the conventional technique in which an aqueous solution containing 30% or more of an alkali metal carbonate is allowed to react with isocyanates, as particularly in Patent Literature 1, unreacted water remains in a large amount because a large amount of water is used, so that in order to use it as a heat insulating material, drying needs to be carried out, and besides, it is thought that the heat insulation performance is not great because the cell size of the resulting foam becomes large.

As techniques to improve combustion resistance by coating synthetic resin foams, a technique relating to a heat insulating coated granular body obtained by further coating synthetic resin foam particles, on which a coating composed of sepiolite and an aqueous organic binder containing a water-soluble resin as a main component has been formed by surface treatment, with a coating material composed of an inorganic powder and water glass containing an alkali metal silicate as a main component, and dry hardening the particles (Patent Literature 3), and a technique relating to an inorganic substance-containing synthetic resin foam in which a cell structure on at least a part of a surface of a synthetic resin foam is filled with a silica-based inorganic substance composed of one or a mixture of two or more of calcium silicate, magnesium silicate, aluminum silicate, and aluminosilicate (Patent Literature 4) are disclosed. However, in these conventional techniques using silicates, the resin foam melts and loses binding power of the filled silicate itself and is powdered by combustion, so that retention of the shape as a heat insulating board is thought to be difficult.

As a technique to reinforce a fireproof heat insulating material surface with fibers, a technique relating to a laminate having a heat-absorbing material having a porous molded body composed of a water-absorbed inorganic porous molded body containing a calcium silicate powder, and particles containing magnesium phosphate hydrate and a binder, and a fiber heat insulating material composed of inorganic fibers having a shrinkage factor of 5% or less under the conditions of 1100°C and 24 hours (Patent Literature 5) is disclosed. However, Patent literature 5 is a technique to prevent the spread of fire of a cable by laminating a material of high heat insulating properties, and its performance mainly depends on heat insulating properties, so that it cannot be applied to buildings as it is. The fireproof structure of Patent Literature 5 does not contain water of crystallization.

A technique relating to a foamed resin composite structure wherein in a foamed resin formed from bead method polystyrene foam, communicating voids formed among foam beads are filled with a filling material composed of an organic substance having an oxygen index of more than 21 (Patent Literature 6), and a technique relating to a composite molded body wherein in a thermoplastic resin foamed particle molded body having communicating voids and a void ratio of 5 to 60%, the voids are filled with a hardened product of cement or gypsum containing smectite (Patent Literature 7) are known. However, in Patent Literature 6, the communicating voids are filled with a filling material that is an organic substance, so that improvement of combustion resistance achieving a non-combustible level cannot be expected. Also, in Patent Literature 6, expanded polystyrene foam having extremely dense and solid voids and having a foam void ratio of about 3% is assumed to be applied, and it is difficult to say that the voids are effectively utilized. In Patent Literature 7, it is preferable that hardened cement contain ettringite, and an example of cement containing ettringite is given under a product name, but there is no description about the reinforcing fibers used.

Patent Literature 8 describes a composition containing calcium aluminate having a CaO content of 40% by mass or more, gypsum, an inorganic powder having a hallow structure and a mean particle size of 20 to 60 $\mu$m, and a waste glass foam powder having a mean particle size of 20 to 130 $\mu$m, and it is described that a reinforcing material such as a nonwoven fabric or a fiber sheet can also be arranged on one or both surfaces of a molded body of a non-combustible heat insulating material, but the type of the reinforcing material or the like is not limited. A material described in Patent Literature 9 is used for the purpose of coating a steel frame surface due to protection from a fire, while the material is thought not to have great heat insulation performance.

A composition for fireproof coating which is characterized by containing ettringite as a main component and which contains an inorganic compound particulate granular body or a titanium oxide particulate granular body each releasing a non-combustible gas at 100 to 1000°C (Patent Literature 10) is known.

A technique relating to a non-calcined fireproof heat insulating material composed of a heat-resistant aggregate, a lightweight aggregate, an alumina-based binder, silicon carbide, and reinforcing fibers is known (Patent Literature 11). In Patent Literature 11, Shirasu balloon as the lightweight aggregate and calcium aluminate as the alumina-based binder are described.

Citation List

Patent Literature

Patent Literature 1
Japanese Patent Laid-Open No. 10-067576
Patent Literature 2
Japanese Patent Laid-Open No. 08-092555
Patent Literature 3
Japanese Patent Laid-Open No. 2001-329629
Patent Literature 4
Japanese Patent Laid-Open No. 2012-102305
Patent Literature 5
Japanese Patent Laid-Open No. 2016-065360
Patent Literature 6
Japanese Patent No. 4983967
Patent Literature 7
Japanese Patent Laid-Open No. 2015-199945
Patent Literature 8
Japanese Patent Laid-Open No. 2017-077994
Patent Literature 9
Japanese Patent Laid-Open No. 07-048153
Patent Literature 10
Japanese Patent Laid-Open No. 07-061841
Patent Literature 11
Japanese Patent Laid-Open No. 62-041774

Summary of Invention

Technical Problem

However, the conventional techniques described in the aforesaid Patent Literatures 10 and 11 are still premised on use as fireproof heat insulating materials in high temperature region used for iron manufacture or steel manufacture, so that both of heat insulation performance under normal environment and fire resistance in the event of a fire are insufficient. On this account, a technique capable of satisfying both of heat insulation performance and fire resistance has been desired.

Solution to Problem

The present inventors have made various studies, and as a result, they have found that by using a specific composition, such a problem as mentioned above can be solved and a fireproof heat insulating board capable of satisfying both of high heat insulation performance and fireproof performance can be obtained, and they have completed the present invention.
That is to say, embodiments of the present invention can provide the following aspects.

Aspect 1.

A fireproof heat insulating board comprising a foamed resin molded body filled with a slurry, the foamed resin molded body having continuous voids, wherein

the filled slurry forms a hydrate containing water of crystallization in an amount of 50 kg/m$^3$ or more through hydration reaction after the filling, and
at least a part of a surface of the board is reinforced with one or more inorganic fibers selected from the group consisting of a basalt fiber and a ceramic fiber.

Aspect 2.

The fireproof heat insulating board according to Aspect 1, wherein the hydrate contains one or more selected from the group consisting of gypsum dihydrate and ettringite in an amount of 50% by mass or more.

Aspect 3.

The fireproof heat insulating board according to Aspect 1 or 2, wherein the foamed resin molded body comprises one or more selected from the group consisting of a foamed polyurethane resin, a foamed polystyrene resin, a foamed polyolefin resin, and a foamed phenolic resin.

Aspect 4.

The fireproof heat insulating board according to any one of Aspects 1 to 3, wherein a continuous void ratio of the foamed resin molded body is 25 to 70% by volume.

Aspect 5.

The fireproof heat insulating board according to any one of Aspects 1 to 4, wherein the fireproof heat insulating board has a density of 250 to 800 kg/m$^3$.

Aspect 6.

A fireproof heat insulating structure comprising the fireproof heat insulating board according to any one of Aspects 1 to 5.

Advantageous Effects of Invention

The fireproof heat insulating board according to the present invention exhibits both effects of fire resistance and heat insulating properties. By building a fireproof heat insulating structure such as a wall or a column using the

**EP 4 116 279 A1**

fireproof heat insulating board, the structure neither collapses nor deforms even if it receives flames, and can retain its shape, so that the fireproof heat insulating board also exhibits an effect of preventing the spread of fire in the event of a fire.

Brief Description of Drawings

Figure 1 is a side view showing a fire resistance test.
Figure 2 is a top view showing a fire resistance test.

Description of Embodiments

Hereinafter, the present invention will be described in detail. Unless otherwise noted, the terms "part(s)" and "%" in the present specification are each expressed on a mass basis. Unless otherwise noted, the numerical value range in the present specification includes its upper limit and lower limit.

The fireproof heat insulating board according to an embodiment of the present invention is characterized by containing a hydrate. Such a hydrate may contain, for example, ettringite ($3CaO \cdot Al_2O_3 \cdot 3CaSO_4 \cdot 32H_2O$), gypsum dihydrate, or a mixture thereof. In a preferred embodiment, the hydrate may contain ettringite or gypsum dihydrate, or a mixture thereof, in an amount of 50% by mass or more, and the hydrate may more preferably contain it in an amount of 60% by mass or more, 80% by mass or more, 90% by mass or more, or 100% by mass.

The hydrate may preferably contain water of crystallization in an amount of 50 $kg/m^3$ or more, and more preferably contains it in an amount of 70 $kg/m^3$ or more. The hydrate may preferably contain water of crystallization in an amount of 400 $kg/m^3$ or less, and more preferably contains it in an amount of 300 $kg/m^3$ or less.

Moreover, the hydrate may preferably be one formed by hydration reaction after filling of voids of a foamed resin molded body having continuous voids (hereinafter abbreviated also as a resin molded body) with a raw material, from the viewpoint of improvement in fire resistance. Such a raw material is not particularly limited. Examples of the raw materials to form ettringite may include a mixture of hauyne belite cement and gypsum, and a mixture of calcium aluminate and gypsum. On the other hand, examples of the raw materials to form gypsum dihydrate may include α-type gypsum hemihydrate and β-type gypsum hemihydrate. Among the raw materials, a raw material to form ettringite is preferred. Among the raw materials to form ettringite, a mixture of calcium aluminate and gypsum is preferred.

The calcium aluminate is the generic term for substances containing CaO and $Al_2O_3$ as main components and having hydration activity, which are obtained by mixing a calcia raw material, an alumina raw material, etc., calcining the mixture in a kiln or melting it in an electric furnace, and cooling. The calcium aluminate is not particularly limited, but amorphous calcium aluminate obtained by quenching after the melting may be preferred from the viewpoint of initial strength developability after hardening. The CaO content in the calcium aluminate may preferably be 30% by mass or more, more preferably 34% by mass or more, and most preferably 40% by mass or more, from the viewpoint of reaction activity. When the CaO content is 34% by mass or more, fire resistance is exhibited. The CaO content in the calcium aluminate may preferably be 50% by mass or less.

As the calcium aluminate, a compound in which a part of CaO or $Al_2O_3$ of calcium aluminate has been substituted by an alkali metal oxide, an alkaline earth metal oxide, silicon oxide, titanium oxide, iron oxide, an alkali metal halide, an alkaline earth metal halide, an alkali metal sulfate, an alkaline earth metal sulfate, etc., may also be used. Alternatively, a compound in which small amounts of the above substances are formed into solid solution with a substance containing CaO and $Al_2O_3$ as main components may also be used as the calcium aluminate.

The vitrification ratio of the calcium aluminate may preferably be 8% or more, preferably 50% or more, and most preferably 90% or more. The vitrification ratio of the calcium aluminate can be calculated by the following method. Regarding a sample before heating, a main peak area S of a crystal mineral is measured in advance by powder X-ray diffractometry, thereafter, the sample was heated at 1000°C for 2 hours and then slowly cooled at a cooling rate of 1 to 10°C/min, then a main peak area So of the crystal mineral after heating is determined by powder X-ray diffractometry, and further, using the values of these $S_0$ and S, the vitrification ratio $\chi$ is calculated from the following formula.

$$\text{Vitrification ratio } \chi \ (\%) = 100 \times (1 - S/S_0)$$

A particle size of the calcium aluminate may preferably be 3000 $cm^2/g$ or more, and more preferably 5000 $cm^2/g$ or more, in terms of Blaine's specific surface area, from the viewpoint of initial strength developability. When the particle size is 3000 $cm^2/g$ or more, the initial strength developability is improved, so that such a particle size is preferable. Here, the Blaine's specific surface area is a value measured in accordance with JIS R5201:2015, "Physical testing methods for cement."

6

As the gypsum contained in the composition, any of anhydrous gypsum, gypsum hemihydrate, and gypsum dihydrate may also be used, and the gypsum is not particularly limited, The anhydrous gypsum is the generic term for compounds that are each anhydrous calcium sulfate and are represented by the molecular formula of $CaSO_4$; the gypsum hemihydrate is the generic term for compounds represented by the molecular formula of $CaSO_4 \cdot 1/2H_2O$; and the gypsum dihydrate is the generic term for compounds represented by the molecular formula of $CaSO_4 \cdot 2H_2O$.

A particle size of the gypsum may preferably be 1 to 30 $\mu$m, and more preferably 5 to 25 $\mu$m, in terms of a mean particle size, from the viewpoint that non-combustibility, initial strength developability, and an appropriate working time are obtained. Here, the mean particle size is a value measured by a laser diffraction particle size distribution analyzer in a state where gypsum is dispersed using an ultrasonic device.

A particle size of the gypsum may preferably be 3000 cm$^2$/g or more, and more preferably 4000 cm$^2$/g or more, in terms of Blaine's specific surface area, from the viewpoint that non-combustibility, initial strength developability, and an appropriate working time are obtained.

As the pH of the gypsum given when it is immersed in water, a value of weak alkalinity to acidity may be preferable, and pH 8 or less may be more preferable. When the pH is 8 or less, solubility of a gypsum component is low, and non-combustibility and initial strength developability are improved, so that such pH is preferable. The pH referred to herein is a value obtained by measuring pH of a dilute slurry of the ratio of gypsum/ion-exchanged water = 1 g/100 g at 20°C using an ion exchange electrode or the like.

In the composition, the amount of the gypsum used may preferably be 70 to 250 parts by mass, and more preferably 100 to 200 parts by mass, based on 100 parts by mass of the calcium aluminate. When the amount of the gypsum is 70 parts by mass or more or 300 parts by mass or less, sufficient fire resistance is imparted, so that such an amount is preferable.

In an embodiment of the present invention, for forming a hydrate through hydration reaction after filling of the voids of the foamed resin molded body with a raw material, a raw material for forming the hydrate and water (tap water or the like) are mixed to prepare a slurry for forming a hydrate. Such a raw material is preferably a powder (the raw material that is a powder is also referred to as a "powder raw material"). The amount of water used in the preparation of the slurry is not particularly limited, but it may preferably be 40 to 300 parts by mass, and more preferably 80 to 250 parts by mass, based on 100 parts by mass of the raw material. When the amount of water used is 40 parts by mass or more, variation does not occur in filling of the voids, and fire resistance is not impaired. When the amount of water used is 300 parts by mass or less, the hydrate content in the hardened body in the voids is not decreased, and fire resistance is not impaired.

In a certain embodiment, for preparing the slurry, one or more of various additives may further be used to the extent that they do not affect the performance. Examples of such additives include, but not limited to, the following ones. Various surfactants to adjust fluidity of the slurry; air entraining agents to introduce air bubbles; carbonization accelerators, such as saccharides; flame retarders, such as a phosphorus compound, a bromine compound, a boron compound, a nitrogen compound, magnesium hydroxide, and sodium hydrogencarbonate; fire spread prevention agents, such as thermally expandable graphite; inorganic substances, such as talc and zeolite; hydration accelerators, such as slaked lime and various carbonates; setting retarders, such as oxycarboxylic acid salt and tartaric acid; conventional rust-proof agents, antifreezing agents and shrinkage reducing agents; clay minerals, such as bentonite and sepiolite; and anion exchangers, such as hydrotalcite.

The foamed resin molded body according to an embodiment of the present invention refers to a resin having continuous voids and one having voids capable of being filled with a hydrate such as a slurry. Examples of the resin types may include a foamed polyvinyl alcohol resin, a foamed polyurethane resin, a foamed polystyrene resin, a foamed polyolefin resin, and a foamed phenolic resin. Among these, one or more selected from the group consisting of a foamed polyurethane resin, a foamed polystyrene resin, a foamed polyolefin resin, and a foamed phenolic resin may be preferable. By placing a particulate foam of several *mm* in diameter, which is composed of any of these resins and has closed cells, in a mold and subjecting it to heat-pressure molding to mold the foam so that continuous voids may be formed in the particulate foam, the resin molded body is obtained. The continuous void ratio of the resin molded body may be adjusted by the degree of pressure applied during the production. Regarding the polystyrene resin, a resin molded body having continuous voids may be produced in accordance with a method for producing bead method polystyrene foam. Among these, a foamed polystyrene resin molded body is preferably used from the viewpoint of versatility. When the continuous void ratio of the foamed resin molded body is 25% by volume or more, sufficient fire resistance can be imparted to the resulting board, so that such a void ratio is preferable. When the continuous void ratio of the foamed resin molded body is 70% by volume or less, the board density is decreased, the thermal conductivity is decreased, and the heat insulting properties are improved, so that such a void ratio is preferable.

A method for filling the resin molded body with a hydrate such as a slurry is not particularly limited, but examples of the methods may include a method in which filling is achieved by injection due to compressed air or suction by reduction of pressure with a vacuum pump, and a method in which a resin molded body is set on a vibration table and the voids are filled while applying vibration of 30 to 60 Hz. Among these, the method in which the voids are filled while applying vibration may be preferable from the viewpoint of quality stability.

At least one inorganic fiber selected from a basalt fiber and a ceramic fiber (also referred to as an "inorganic fiber" simply hereinafter) contained in the fireproof heat insulating board suppresses deformation or shrinkage of the fireproof heat insulating board and further suppresses an evaporation rate of water of crystallization of the hydrate when the fireproof heat insulating board is exposed to high temperatures, and thereby, an effect of improving fire resistance is exhibited.

The basalt fiber refers to a fiber obtained by crushing high-density basalt, melting the crushed basalt at a high temperature of 1500°C or higher, and spinning it. The ceramic fiber refers to a generic term for artificial mineral fibers containing alumina ($Al_2O_3$) and silica ($SiO_2$) as main components. The ceramic fibers are classified into amorphous alumina silica fiber (RCF: Refractory Ceramic Fiber) and crystalline fiber (AF: Alumina Fiber) composed of alumina and silica and having an alumina content of 60% or more, but these are both employable.

The type of usage of the inorganic fiber is not particularly limited, but a usage type obtained by knitting bundles of the fibers to process them into a cloth, a usage type obtained by cutting the fibers to a length of about 1 to 50 mm or about 1 to 30 mm to process them into staple fibers, a usage type obtained by mixing staple fibers and an organic solvent or the like and processing the mixture into a sheet having a thickness of about 0.1 mm to 3 mm by a sheet forming method, etc., may be used. Among these, a cloth obtained by processing the fibers is preferable from the viewpoint of easy handling. Such an inorganic fiber is preferably applied to at least a part of the surface of the fireproof heat insulating board, more preferably to the entire surface, to reinforce the board. The inorganic fiber may be contained inside the fireproof heat insulating board. The term "surface of the fireproof heat insulating board" referred to herein preferably indicates a plane having an area defined by a length and a width that are each larger than the thickness, but it may include a plane parallel to the thickness direction.

The amount of the inorganic fiber used is not particularly limited, but it may preferably be 30 to 350 $g/m^2$, and more preferably 50 to 200 $g/m^2$. When the amount of the inorganic fiber is 30 $g/m^2$ or more, a sufficient shrinkage suppressing effect is obtained, and when the amount thereof is 350 $g/m^2$ or less, an increase of the effect is thought to become the upper limit that can be expected, so that such an amount is economical.

A method for curing the fireproof heat insulating board after filling of the voids with the fireproof heat insulating composition slurry is not particularly limited, but after the filling, atmospheric curing may be carried out at ordinary temperature, or atmospheric curing may be carried out at ordinary temperature while covering the fireproof heat insulting board surface with a plastic film, or in order to shorten the curing time, curing may be carried out at a temperature of 30 to 50° C.

In a certain embodiment, it is also possible to further coat the whole of the fireproof heat insulating board with a nonwoven fabric or to stick a non-combustible paper, an aluminum foil coated craft paper or the like to the fireproof heat insulating board surface.

A shape of the fireproof heat insulating board according to an embodiment of the present invention is not particularly limited, but a preferred one may have a length in the range of 500 to 1000 mm, a width in the range of 1000 to 2000 mm, and a thickness in the range of 10 to 100 mm. When the size is in this range, the fireproof heating insulating board does not become too heavy, and the workability during setting is good.

The density of the fireproof heat insulating board according to an embodiment of the present invention may be adjusted to the extent that the fire resistance and the heat insulating properties are not impaired. The density may preferably be, for example, 250 to 800 $kg/m^3$, and more preferably 300 to 600 $kg/m^3$. A density of 250 $kg/m^3$ or more is preferable because sufficient fire resistance can be secured. A density of 800 $kg/m^3$ or less is preferable because sufficient heat insulation performance is obtained.

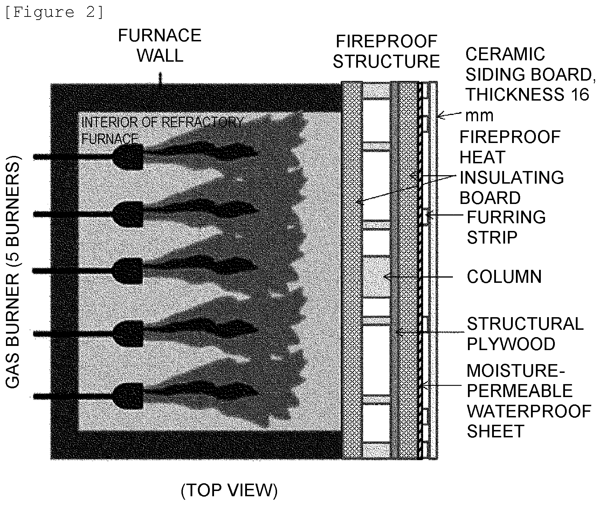

In a certain embodiment, a fireproof structure capable of being used in a building may be provided using the aforesaid fireproof heat insulating board. Such a fireproof structure may be, for example, a structure which consists of layers of a siding board, a moisture-permeable waterproof sheet, the fireproof heat insulating board, a structural plywood, and the fireproof heat insulating board in this order when shown as a layer structure from the exterior wall side and in which a space (i.e., space for placing therein a heat insulating material such as glass wool) of about 100 mm is provided between the structural plywood and the fireproof heat insulating board by means of studs. Between the siding board and the moisture-permeable waterproof sheet, furring strips may be provided. See Figure 2.

When the fireproof structure is built, a plurality of the fireproof heat insulating boards laminated may be stuck according to the required fireproof specifications, or the fireproof heat insulating board may be used in combination with a reinforced gypsum board, a calcium silicate board, or the like.

Examples

Hereinafter, the subject matter will be described in more detail with reference to examples and comparative examples, but the present invention is not limited thereto.

Experimental Example 1

To the whole of a lower surface of a foamed resin molded body (size: length 20 cm × width 20 cm × thickness 5 cm) having continuous voids, an inorganic fiber shown in Table 1 was applied for reinforcement, and further, a polyethylene nonwoven fabric was superposed thereon. This was set in a vibration impregnation device, then a slurry (i.e., slurry for forming a hydrate) prepared as described later was poured onto an upper surface of the resin molded body, and vibration of 60 Hz was applied for 1 minute to impregnate the voids with the slurry, thereby producing a fireproof heat insulating board. The slurry was a slurry obtained by mixing a powder raw material and water and for forming a hydrate after filling. After filling with the slurry, the fireproof heat insulating board was taken out of the device and cured at ordinary temperature for 7 days, and a content of water of crystalline in the hydrate, fire resistance, retention of shape, a shape retention ratio, and a thermal conductivity were evaluated. The results are set forth in Table 1.

Materials used

Foamed resin molded body A2: A molding machine ("VS-500" manufactured by DAISEN INDUSTRY CO., LTD.) was filled with commercially available polystyrene resin foam beads (diameter: 1 to 5 mm), and the beads were heated with steam to fusion-bond foamed particles to one another in a state where voids were present among the foamed particles, thereby producing a foamed resin molded body having open cells. The continuous void ratio was controlled by adjusting the degree of pressure applied. The foamed resin molded body before filling with a slurry described later had a continuous void ratio of 36.8% by volume, and the foamed resin molded body had a density of 10.5 kg/m$^3$ and a thermal conductivity of 0.033 W/(m.K). The density of the foamed resin molded body was determined by measuring a mass and external dimensions of the foamed resin molded body and dividing the mass by an apparent volume obtained from the external dimensions.

Slurry raw material powder 1 (RM1): Mixture of 100 parts by mass of calcium aluminate (CA1) and 120 parts by mass of gypsum (CS1), hydrate formed: ettringite 100%; The ettringite formation ratio was determined by X-ray diffractometry.

Calcium aluminate (CA1): Amorphous calcium aluminate obtained by preparing calcium aluminate so as to have 43% by mass of CaO and 53% by mass of $Al_2O_3$, melting it in an electric furnace and quenching, Blaine's specific surface area: 6100 cm$^2$/g, vitrification ratio = 95%.

Gypsum (CS1): Natural anhydrous gypsum crushed product, Blaine's specific surface area = 4600 cm$^2$/g, pH = 8 or less.

Inorganic fiber 1 (IF1): Basalt fiber cloth manufactured by GBF Basalt Fiber Co., Ltd., product name "BCGM120", amount of fiber used = 100 g/m$^2$.

Inorganic fiber 2 (IF2): Basalt staple fiber manufactured by GBF Basalt Fiber Co., Ltd., product name "KV13", mean fiber length = 5 mm, amount of fiber used = 150 g/m$^2$.

Inorganic fiber 3 (IF3): Alumina paper manufactured by Zircar Ceramics Inc., product name "Alumina Type AL25/1700", product thickness = 1 mm, amount of fiber used = 40 g/m$^2$

Inorganic fiber 4 (IF4): Alumina chopped fiber manufactured by Nitivy Co., Ltd., product name "NITIVY ALF", mean fiber length = 5 mm, amount of fiber used = 100 g/m$^2$.

Glass fiber 1 (G1): Glass fiber cloth manufactured by Nippon Electric Glass Co., Ltd., product name "ARG TG10×10", amount of fiber used = 150 g/m$^2$.

Preparation of slurry and amount of charge

To 100 parts by mass of a powder (slurry raw material powder 1), 100 parts by mass of water (tap water) was added, and they were stirred for 5 minutes, thereby preparing a slurry for forming a hydrate. The slurry prepared was poured onto an upper surface of the foamed resin molded body in such a manner that the volume became 810 cm$^3$ (i.e., 1.1 times the void volume of the resin molded body).

Measuring methods

Continuous void ratio: A continuous void ratio of the foamed resin molded body was determined. A sample was cut out from the foamed resin molded body having been allowed to stand in an environment of a temperature of 23°C and a relative humidity of 50% for 24 hours, from the external dimensions (length 10 cm × width 10 cm × thickness 5 cm) of the sample, an apparent volume (Va) was determined, then the sample was sunk in a graduated cylinder containing ethanol at a temperature of 23°C using a wire cloth, and light vibration was applied to expel air present in voids of the molded body. The light vibration was given by tapping the graduated cylinder with a light force. The light vibration was continuously given until the volume of the sample reached constant. A water level rise was read out while considering the volume of the wire cloth, and a true volume **Vb** of the sample was measured. Using the apparent volume **Va** and the true volume **Vb** of the sample determined, a continuous void ratio **V** was determined by the following formula.

$$\texttt{Continuous void ratio V (\%) = [(Va-Vb)/Va] × 100}$$

Content of water of crystallization (amount of water of crystallization): From the fireproof heat insulating board, 20 g of a sample was taken out, then free water in the hardened body and the foam body were dissolved in acetone, the solution was filtered, and then, the residue was sufficiently washed with acetone and vacuum dried in a desiccator in an environment of 25°C for 48 hours. Regarding the dried hardened product, mass reduction in the range of 50 to 200°C was measured by a thermal analyzer (heating rate: 10°C/min, in air), and the amount of water of crystallization was calculated. Note that the water of crystallization referred to herein means chemically or physically bonded water contained in the fireproof heat insulating board, excluding free water that can be removed by drying, such as using acetone.

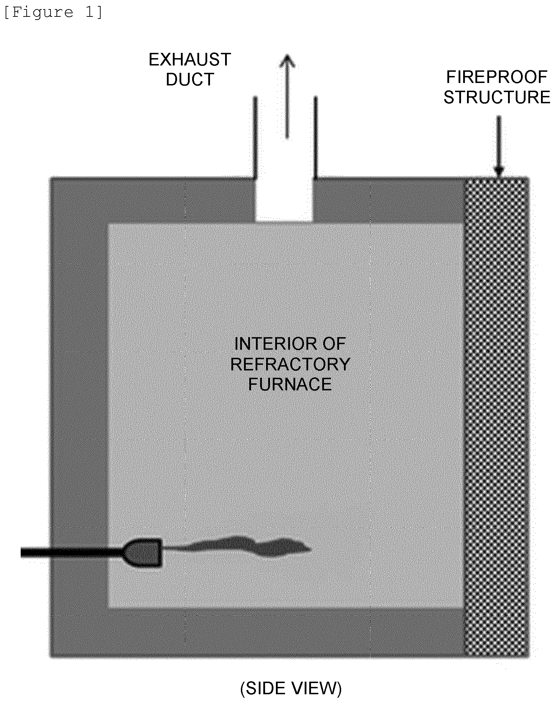

Fire resistance: Fire resistance was simply evaluated using small gas burners and a thermocouple, as shown in Figures 1 and 2. Using a test piece of length 10 cm × width 10 cm × thickness 5 cm, the distance between the test piece and the gas burners was adjusted in such a manner that the surface temperature of the test piece became 900°C, then the temperature of the back surface of the test piece was measured with the thermocouple, and the time to reach 100°C was measured. That is to say, the longer the time to reach 100°C is, the more excellent the fire resistance is.

Thermal conductivity: Using a test piece of length 10 cm × width 10 cm × thickness 5 cm obtained from the fireproof heat insulating board, a thermal conductivity was measured with a rapid thermal conductivity meter (i.e., box-type probe method).

Retention of shape: When the test piece was free from crack, breakage, collapse, and defective part after the fire resistance test, the retention of shape was evaluated as "Good", and when crack, breakage, collapse, or defective part was confirmed on the test piece, the retention of shape was evaluated as "NG" (inappropriate).

Shape retention ratio: A test piece was placed in an electric furnace and heated up to 900°C, after the elapse of 1 hour, a volume of the test piece was measured, then the resulting volume was compared with the volume of the test piece before heating, and a shape retention ratio was calculated.

[Table 1]

| Experiment No. | Inorganic fiber | Amount of water of crystallization [kg/m$^3$] | Fire resistance [min] | Retention of shape | Shape retention ratio [%] | Thermal conductivity [W/m.K] | Remarks |
|---|---|---|---|---|---|---|---|
| 1-1 | None | 128 | 25 | NG | Unmeasurable | 0.050 | Comparative example |
| 1-2 | IF1 | 128 | 50 | Good | 97.0 | 0.049 | Example |
| 1-3 | IF2 | 128 | 52 | Good | 96.5 | 0.050 | Example |
| 1-4 | IF3 | 128 | 45 | Good | 97.2 | 0.050 | Example |
| 1-5 | IF4 | 128 | 49 | Good | 97.1 | 0.050 | Example |
| 1-6 | G1 | 128 | 32 | NG | 88.6 | 0.050 | Comparative example |

From Table 1, it can be seen that by using the inorganic fiber satisfying the prescribed conditions to reinforce the fireproof heat insulating board, the fire resistance and the retention of shape were greatly improved.

Experimental Example 2

Operations were carried out in the same manner as in Experimental Example 1, except that an inorganic fiber of the type and the amount shown in Table 2 was used to prepare a board. The results are set forth in Table 2.

[Table 2]

| Experiment No. | Inorganic fiber | Amount of fiber used [g/m²] | Amount of water of crystallization [kg/m³] | Fire resistance [min] | Retention of shape | Shape retention ratio [%] | Thermal conductivity [W/m.K] | Remarks |
|---|---|---|---|---|---|---|---|---|
| 2-1 | IF1 | 30 | 128 | 47 | Good | 96.2 | 0.050 | Example |
| 2-2 | IF1 | 50 | 128 | 48 | Good | 96.8 | 0.049 | Example |
| 1-2 | IF1 | 100 | 128 | 50 | Good | 97.0 | 0.049 | Example |
| 2-3 | IF1 | 150 | 128 | 52 | Good | 97.4 | 0.049 | Example |
| 2-4 | IF1 | 250 | 128 | 55 | Good | 97.9 | 0.050 | Example |
| 2-5 | IF1 | 350 | 128 | 60 | Good | 98.0 | 0.050 | Example |
| 2-6 | IF1/IF4 | 50/50 | 128 | 49 | Good | 97.0 | 0.050 | Example |

It can be seen that the fire resistance and the retention of shape of the fireproof heat insulating board were greatly improved by the inorganic fiber of the amount shown in Table 2.

Experimental Example 3

Operations were carried out in the same manner as in Experimental Example 1, except that a slurry raw material powder of the type shown in Table 3 was used to prepare a board. The results are set forth in Table 3.

Materials used

Slurry raw material powder 2 (RM2): Mixture of 100 parts of calcium aluminate (CA2) and 100 parts of gypsum (CS1); hydrate formed = ettringite 82%, aluminum hydroxide 8%, and others 10%

Calcium aluminate (CA2): CaO = 34% by mass, Blaine's specific surface area = 4500 $cm^2/g$, vitrification ratio = 15%

Slurry raw material powder 3 (RM3): hauyne belite cement (manufactured by BUZZI Unicem S.p.A., product name "BUZZI NEXT BASE"); hydrate formed = ettringite 90% and others 10%

Slurry raw material powder 4 (RM4): β-type gypsum hemihydrate (manufactured by Noritake Co., Ltd., product name "FT-2", mean particle size = 15 μm), hydrate formed = gypsum dihydrate 100%

Synthetic ettringite 1 (ET1): Ettringite powder obtained by using slaked lime, aluminum sulfate and gypsum as starting raw materials, performing hydrothermal synthesis, and filtering and drying the resulting product; ratio of water of crystallization = 46%

[Table 3]

| Experiment No. | Raw material powder | Amount of water of crystallization [kg/m3] | Fire resistance [min] | Retention of shape | Shape retention ratio [%] | Thermal conductivity [W/m.K] | Remarks |
|---|---|---|---|---|---|---|---|
| 1-2 | RM1 | 128 | 50 | Good | 97.0 | 0.049 | Example |
| 3-1 | RM2 | 128 | 47 | Good | 96.5 | 0.049 | Example |
| 3-2 | RM3 | 128 | 49 | Good | 96.8 | 0.049 | Example |
| 3-3 | RM4 | 80 | 42 | Good | 94.3 | 0.049 | Example |
| 3-4 | ET1 | 92 | 26 | NG | Unmeasurable | 0.049 | Comparative example |

From Table 3, it can be seen that by using the raw material powder that formed a hydrate through hydration reaction after filling, excellent fire resistance, retention of shape, and heat insulating properties were exhibited. On the other hand, Experiment No. 3-4 that corresponds to a comparative example using synthetic ettringite did not exhibit excellent performance though the amount of water of crystallization was larger than that of Experiment No. 3-3. The reason for this is that water added in the preparation of the slurry was not consumed for the hydration reaction and existed as free water, so that the free water was easily lost when subjected to drying over time or heating, so that denseness of the test piece was lost.

[Experimental Example 4]

Operations were carried out in the same manner as in Experimental Example 1, except that to 100 parts by mass of a powder (slurry raw material powder 1), water was added as shown in Table 4 to prepare a slurry. The results are set forth in Table 4.

[Table 4]

| Experiment No. | Water [part(s) by mass] | Amount of water of crystallization [kg/m$^3$] | Fire resistance [min] | Retention of shape | Shape retention ratio [%] | Thermal conductivity [W/m.K] | Remarks |
|---|---|---|---|---|---|---|---|
| 4-1 | 40 | 118 | 55 | Good | 97.0 | 0.053 | Example |
| 4-2 | 80 | 122 | 51 | Good | 97.0 | 0.052 | Example |
| 1-2 | 100 | 128 | 50 | Good | 97.0 | 0.049 | Example |
| 4-3 | 150 | 126 | 51 | Good | 97.7 | 0.046 | Example |
| 4-4 | 200 | 126 | 53 | Good | 97.5 | 0.046 | Example |
| 4-5 | 250 | 124 | 54 | Good | 96.2 | 0.047 | Example |
| 4-6 | 300 | 119 | 56 | Good | 95.2 | 0.050 | Example |

The amount of water is expressed in part(s) by mass based on 100 parts by mass of the powder.
The amount of water is expressed in part(s) by mass based on 100 parts by mass of the powder.
From Table 4, it can be seen that by preparing a fireproof heat insulating composition slurry using an appropriate amount of water, excellent fire resistance, retention of shape, and heat insulating properties are exhibited.

Experimental Example 5

Operations were carried out in the same manner as in Experimental Example 1, except that an inorganic fiber 1 (IF1) was used as the inorganic fiber, a slurry raw material powder 1 was used as the slurry raw material powder, and a foamed resin molded body shown in Table 5 was used as the foamed resin molded body. The results are set forth in Table 5. Here, the density of the resulting fireproof heat insulating board was measured and taken as a board density.

Materials used

Foamed resin molded body A (A1 to A4): A molding machine ("VS-500" manufactured by DAISEN INDUSTRY CO., LTD.) was filled with commercially available foamed polystyrene resin beads (particle size = 1 to 5 mm), and the beads were heated with steam to fusion-bond foamed particles to one another in a state where voids were present among the foamed particles, thereby producing a foamed resin molded body having open cells. The open cell ratio was controlled by adjusting the degree of pressure applied. The thermal conductivity of a foamed resin molded body filled with no non-combustible material slurry was 0.033 W/(m.K).
Foamed resin molded body B (B1 to B4): A commercially available foamed rigid polyurethane resin molded body was crushed to prepare a particulate material having a particle size of 1 to 5 mm. A molding machine ("VS-500" manufactured by DAISEN INDUSTRY CO., LTD.) was filled with the resulting particulate material, and the particulate material was heated with steam to fusion-bond foamed particles to one another in a state where voids were present among the foamed particles, thereby producing a foamed resin molded body having open cells. The open cell ratio was controlled by adjusting the degree of pressure applied. The thermal conductivity of a foamed resin molded body filled with no non-combustible material slurry was 0.027 W/(m.K).
Foamed resin molded body C (C1 to C4): Commercially available polyethylene foam was crushed to prepare a particulate material having a particle size of 1 to 5 mm. A molding machine ("VS-500" manufactured by DAISEN INDUSTRY CO., LTD.) was filled with the resulting particulate material, and the particulate material was heated with steam to fusion-bond foamed particles to one another in a state where voids were present among the foamed particles, thereby producing a foamed resin molded body having open cells. The open cell ratio was controlled by adjusting the degree of pressure applied. The thermal conductivity of a foamed resin molded body filled with no non-combustible material slurry was 0.030 W/(m.K).

Foamed resin molded body D (D1 to D4): Commercially available phenolic resin foam was crushed to prepare a particulate material having a particle size of 1 to 5 mm. A molding machine ("VS-500" manufactured by DAISEN INDUSTRY CO., LTD.) was filled with the resulting particulate material, and the particulate material was heated with steam to fusion-bond foamed particles to one another in a state where voids were present among the foamed particles, thereby producing a foamed resin molded body having open cells. The open cell ratio was controlled by adjusting the degree of pressure applied. The thermal conductivity of a foamed resin molded body filled with no non-combustible material slurry was 0.022 W/(m.K).

[Table 5]

| Experiment No. | Foamed resin molded body | Continuous void ratio [%] | Board density [kg/m$^3$] | Amount of water of crystallization [kg/m$^3$] | Fire resistance [min] | Retention of shape | Shape retention ratio [%] | Thermal conductivity [W/m.K] | Remarks |
|---|---|---|---|---|---|---|---|---|---|
| 5-1 | A1 | 25.4 | 270 | 88 | 41 | Good | 96.7 | 0.048 | Example |
| 1-2 | A2 | 36.8 | 400 | 128 | 50 | Good | 97.0 | 0.049 | Example |
| 5-2 | A3 | 50.2 | 550 | 175 | 56 | Good | 98.0 | 0.051 | Example |
| 5-3 | A4 | 68.9 | 750 | 240 | 68 | Good | 99.1 | 0.055 | Example |
| 5-4 | B1 | 25.6 | 280 | 88 | 41 | Good | 96.9 | 0.041 | Example |
| 5-5 | B2 | 38.0 | 420 | 128 | 50 | Good | 97.2 | 0.042 | Example |
| 5-6 | B3 | 49.9 | 540 | 175 | 56 | Good | 97.6 | 0.045 | Example |
| 5-7 | B4 | 66.9 | 720 | 240 | 68 | Good | 99.3 | 0.050 | Example |
| 5-8 | C1 | 27.0 | 290 | 88 | 41 | Good | 96.8 | 0.042 | Example |
| 5-9 | C2 | 35.0 | 420 | 128 | 50 | Good | 97.1 | 0.043 | Example |
| 5-10 | C3 | 51.2 | 540 | 175 | 56 | Good | 98.2 | 0.045 | Example |
| 5-11 | C4 | 67.5 | 720 | 240 | 68 | Good | 99.4 | 0.051 | Example |
| 5-12 | D1 | 26.8 | 280 | 88 | 41 | Good | 96.2 | 0.040 | Example |
| 5-13 | D2 | 36.7 | 400 | 128 | 50 | Good | 96.4 | 0.041 | Example |
| 5-14 | D3 | 49.8 | 540 | 175 | 56 | Good | 97.9 | 0.043 | Example |
| 5-15 | D4 | 67.9 | 730 | 240 | 68 | Good | 99.0 | 0.049 | Example |

From Table 5, it can be seen that by using a foamed resin molded body having appropriate continuous voids, excellent non-combustibility, retention of shape, and heat insulating properties are exhibited.

Experimental Example 6

Using fireproof heat insulating compositions of Experiment Nos. 1-1, 1-2, 2-5, and 5-2, fireproof heat insulating boards (each: length 1000 mm × width 1000 mm × thickness 25 mm) were prepared, and each fireproof heat insulating board was incorporated so as to build up a fireproof structure shown in Figures 1 and 2, thereby setting the fireproof structure in a refractory furnace. The fireproof structure had a size of width 2200 mm × length 1200 mm. In the test, the type of the fireproof heat insulating composition for the fireproof heat insulating board and the thickness of the board were changed, and after completion of the test, the combustion state of the fireproof structure was checked. Setting of the board by changing of the thickness thereof was carried out by changing the number of the boards set. The results are set forth in Table 6.

Fire resistance test method

As shown in the side view of Figure 1 and the top view of Figure 2, the fireproof structure was set in a refractory furnace, heating was carried out on the interior side simulating an interior wall, that is, flaming from gas burners (five burners in total) was carried out, and the fireproof structure was heated for 1 hour according to a standard heating curve based on ISO 834. Thereafter, heating was terminated, and the fireproof structure was kept in a state of being set in the refractory furnace for 3 hours. The structure was taken out of the refractory furnace, then the fireproof heat insulating board was peeled off, and the combustion state of the column was checked.

[Table 6]

| Experiment No. | Material composition of fireproof heat insulating board | Thickness of fireproof heat insulating board (mm) | Combustion state of fireproof heat insulating board after removal of siding board | Remarks |
|---|---|---|---|---|
| 6-1 | Experiment No.1-1 | 25 | Shape of fireproof heat insulating board was not retained, and column completely burned and buckled. | Comparative example |
| 6-2 | | 50 | Shape of fireproof heat insulating board was retained, but parts near surface layer collapsed. 50% of structural plywood inside and 30% of studs burned and were carbonized. | Comparative example |
| 6-3 | Experiment No.1-2 | 25 | Shape of fireproof heat insulating board was retained, and studs did not burn, but 10% of structural plywood inside burned and was carbonized. | Example |
| 6-4 | | 50 | Shape of fireproof heat insulating board was retained, and structural plywood inside and studs did not burn at all. | Example |
| 6-5 | Experiment No.2-5 | 25 | Shape of fireproof heat insulating board was retained, and structural plywood inside and studs did not burn at all. | Example |
| 6-6 | | 50 | Shape of fireproof heat insulating board was retained, and structural plywood inside and studs did not burn at all. | Example |

(continued)

| Experiment No. | Material composition of fireproof heat insulating board | Thickness of fireproof heat insulating board (mm) | Combustion state of fireproof heat insulating board after removal of siding board | Remarks |
|---|---|---|---|---|
| 6-5 | Experiment No.5-2 | 25 | Shape of fireproof heat insulating board was retained, and structural plywood inside and studs did not burn at all. | Example |
| 6-6 | | 50 | Shape of fireproof heat insulating board was retained, and structural plywood inside and studs did not burn at all. | Example |

From Table 6, it can be seen that when a fireproof structure was built using the fireproof heat insulating board according to the example of the present invention, fire resistance was improved. It can be seen that particularly by overlaying two fireproof heat insulating boards, the wooden part did not burn at all, and excellent fire resistance was exhibited.

Industrial Applicability

By using the fireproof heat insulating composition according to the embodiment and its slurry, a fireproof heat insulating board having fire resistance and heat insulating properties can be obtained. By building a structure such as a wall or a column using the fireproof heat insulating board according to the embodiment, the shape can be retained even if the structure receives flames, and therefore, the fireproof heat insulating board has an effect of inhibiting the spread of fire in the event of a fire. Accordingly, the fireproof heat insulating structure of the embodiment contributes to construction of buildings, vehicles, aircrafts, ships, and freezing/refrigerating equipment each having high fire safety.

**Claims**

1. A fireproof heat insulating board comprising a foamed resin molded body filled with a slurry, the foamed resin molded body having continuous voids, wherein

   the filled slurry forms a hydrate containing water of crystallization in an amount of 50 kg/m$^3$ or more through hydration reaction after the filling, and
   at least a part of a surface of the board is reinforced with one or more inorganic fibers selected from the group consisting of a basalt fiber and a ceramic fiber.

2. The fireproof heat insulating board according to claim 1, wherein the hydrate contains one or more selected from the group consisting of gypsum dihydrate and ettringite in an amount of 50% by mass or more.

3. The fireproof heat insulating board according to claim 1 or 2, wherein the foamed resin molded body comprises one or more selected from the group consisting of a foamed polyurethane resin, a foamed polystyrene resin, a foamed polyolefin resin, and a foamed phenolic resin.

4. The fireproof heat insulating board according to any one of claims 1 to 3, wherein a continuous void ratio of the foamed resin molded body is 25 to 70% by volume.

5. The fireproof heat insulating board according to any one of claims 1 to 4, wherein the fireproof heat insulating board has a density of 250 to 800 kg/m$^3$.

6. A fireproof heat insulating structure comprising the fireproof heat insulating board according to any one of claims 1 to 5.

[Figure 1]

EXHAUST
DUCT

FIREPROOF
STRUCTURE

INTERIOR OF
REFRACTORY
FURNACE

(SIDE VIEW)

[Figure 2]

(TOP VIEW)

## INTERNATIONAL SEARCH REPORT

| International application No. |
|---|
| PCT/JP2021/008276 |

**A. CLASSIFICATION OF SUBJECT MATTER**
Int.Cl. C04B111/28(2006.01)n, C04B111/40(2006.01)n, C08J9/40(2006.01)i, C04B16/08(2006.01)i, C04B28/06(2006.01)i, C04B28/14(2006.01)i, E04B1/94(2006.01)i
FI: E04B1/94W, C04B28/06, C04B28/14, C04B16/08, C08J9/40, C04B111:28, C04B111:40

According to International Patent Classification (IPC) or to both national classification and IPC

**B. FIELDS SEARCHED**

Minimum documentation searched (classification system followed by classification symbols)
Int.Cl. C08J9/40, C04B16/08, C04B28/06, C04B28/14, E04B1/62-1/99

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-077994 A (DENKA CO., LTD.) 27 April 2017 (2017-04-27), paragraphs [0035], [0059]-[0062], table 5 | 1-6 |
| Y | WO 99/16984 A1 (IBIDEN CO., LTD.) 08 April 1999 (1999-04-08), pages 4, 5, fig. 1 | 1-6 |
| Y | JP 3208176 U (YOSHINO GYPSUM CO., LTD.) 28 December 2016 (2016-12-28), paragraph [0024], fig. 3 | 1-6 |
| A | JP 2018-178046 A (DENKA CO., LTD.) 15 November 2018 (2018-11-15), entire text | 1-6 |
| A | JP 2015-199945 A (JSP CORPORATION) 12 November 2015 (2015-11-12), entire text | 1-6 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 April 2021 | 27 April 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/008276

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-193158 A (AKOTA KK) 12 July 1994 (1994-07-12), entire text | 1-6 |

Form PCT/ISA/210 (second sheet) (January 2015)

**INTERNATIONAL SEARCH REPORT**
Information on patent family members

| International application No. |
| --- |
| PCT/JP2021/008276 |

| | | |
| --- | --- | --- |
| JP 2017-077994 A | 27 April 2017 | (Family: none) |
| WO 99/16984 A1 | 08 April 1999 | EP 1022400 A1 paragraphs [0012]-[0024], fig. 1 |
| JP 3208176 U | 28 December 2016 | (Family: none) |
| JP 2018-178046 A | 15 November 2018 | (Family: none) |
| JP 2015-199945 A | 12 November 2015 | (Family: none) |
| JP 6-193158 A | 12 July 1994 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10067576 A
- JP 8092555 A
- JP 2001329629 A
- JP 2012102305 A
- JP 2016065360 A
- JP 4983967 B
- JP 2015199945 A
- JP 2017077994 A
- JP 7048153 A
- JP 7061841 A
- JP 62041774 A